# EUROPÄISCHE PATENTSCHRIFT

(11) **EP 3 368 379 B1**
(45) Veröffentlichungstag und Bekanntmachung des Hinweises auf die Patenterteilung: **14.08.2019**
(21) Anmeldenummer: 16823154.6
(22) Anmeldetag: 27.10.2016
(51) Int. Cl.: B60R 16/023, H04L 29/08, G06F 9/445

(54) **STEUERGERÄTE-UPDATE IM KRAFTFAHRZEUG**
CONTROL DEVICE UPDATE IN A MOTOR VEHICLE
MISE À JOUR DES APPAREILS DE COMMANDE DANS UN VÉHICULE À MOTEUR

(30) Priorität: 30.10.2015 DE 102015014049
(43) Veröffentlichungstag der Anmeldung: 05.09.2018
(73) Patentinhaber: Audi AG, 85045 Ingolstadt (DE)
(72) Erfinder: NETTER, Florian, 85049 Ingolstadt (DE)
(86) Internationale Anmeldenummer: PCT/EP2016/001788
(87) Internationale Veröffentlichungsnummer: WO 2017/071811

(56) Entgegenhaltungen:
- EP-A1- 2 876 553
- DE-A1-102005 021 103
- DE-A1-102015 103 995

## Beschreibung

Die Erfindung betrifft ein Verfahren zum Einstellen eines Konfigurationsdatensatzes in einem Steuergerät eines Kraftfahrzeugs. Bei dem Konfigurationsdatensatz kann es sich beispielsweise um ein Software-Update für das Steuergerät handeln. Zu der Erfindung gehören auch eine Steuervorrichtung zum Durchführen des erfindungsgemäßen Verfahrens sowie ein Kraftfahrzeug mit der erfindungsgemäßen Steuervorrichtung.

Ein Konfigurationsdatensatz kann einem Kraftfahrzeug über eine Funkverbindung von einer zentralen Servereinrichtung aus übermittelt werden. Dieser Vorgang wird als Over-the-Air-Update (kurz OTA-Update) bezeichnet. Die Funkverbindung kann beispielsweise mittels eines WLAN-Funkmoduls (WLAN - wireless local area network) oder eines Mobilfunkmoduls bereitgestellt werden.

Dabei kann zum Beispiel während einer Fahrt ein Kraftfahrzeug nicht umkonfiguriert oder neu konfiguriert werden, da z.B. ein Software-Update eines Steuergeräts während des Betriebs des Kraftfahrzeugs nicht möglich ist. Hiergegen sprechen beispielsweise Sicherheitsgründe. Des Weiteren wird das Steuergerät unter Umständen während der Fahrt benötigt. Daher muss das Fahrzeug in einer Parkphase aktualisiert werden, während der Antriebsmotor des Kraftfahrzeugs ausgeschaltet ist.

Hierbei muss dann aber beachtet werden, dass durch den Betrieb des Steuergeräts für das Einstellen eines Konfigurationsdatensatzes die Energiespeichereinrichtung des Kraftfahrzeugs, also beispielsweise die Fahrzeugbatterie, belastet wird. Ein Nachladen der Energiespeichervorrichtung ist nicht möglich, da in der Parkphase kein Generator für das Wiederaufladen betrieben wird. Ob der Konfigurationsdatensatz erfolgreich installiert oder eingestellt werden kann, ist somit abhängig vom Energiegehalt der Energiespeichereinrichtung. Andernfalls kann das Betreiben eines Steuergeräts in der Parkphase dazu führen, dass die Energiespeichereinrichtung währenddessen entleert wird, sodass das Steuergerät nicht mehr genügend Strom aus der Energiespeichereinrichtung beziehen kann und somit das Einstellen oder Umstellen des Konfigurationsdatensatzes abgebrochen werden muss. Schlimmstenfalls kann dies das Steuergerät in einem funktionsunfähigen Zustand hinterlassen, sodass das Steuergerät in einer Werkstatt repariert werden muss.

Aus der DE 10 2009 036 943 A1 ist hierzu ein Steuergerät eines Ladesystems eines Elektrofahrzeugs bekannt, das ein Software-Update oder Firmware-Update für das Ladegerät auf der Grundlage eines Konfigurationsdatensatzes durchführen kann, der über eine Internetverbindung oder ein Stromversorgungsnetz empfangen werden kann.

Aus der EP 2 706 457 A1 ist ein Kraftfahrzeug bekannt, welches einen Konfigurationsdatensatz über einen USB-Speicher oder über eine Funkverbindung empfangen kann. Der Konfigurationsdatensatz wird hierbei durch ein Infotainmentsystem (Informations-Unterhaltungssystem) empfangen und im Kraftfahrzeug über einen Kommunikationsbus an das Empfänger-Steuergerät weitergeleitet.

Aus der WO 2014/165197 A1 ist ein Kraftfahrzeug bekannt, welches für einen Benutzer des Kraftfahrzeugs über ein Netzwerk Betriebsdaten des Kraftfahrzeugs sammeln und dem Benutzer auf einem Bildschirm darstellen kann. Die Betriebsdaten betreffen insbesondere einen aktuellen Ladezustand einer Energiespeichereinrichtung des Kraftfahrzeugs, die beispielsweise Batterien oder Doppelschichtkondensatoren umfassen kann.

In der US 2013/0197712 A1 ist ein Verfahren zum Betreiben eines Kraftfahrzeugs beschrieben, um in dem Kraftfahrzeug ein Steuerprogramm in einem Steuergerät zu aktualisieren. Hierbei wird der Energiebedarf für dieses Update geprüft und mit dem aktuellen Ladezustand der Fahrzeugbatterie abgeglichen. Um nach einem Ausschalten der Zündung des Kraftfahrzeugs zu verhindern, dass alle Steuergeräte, die ein Update benötigen, gleichzeitig das Zündung-aus-Signal auswerten, ist in die Steuergeräte ein Zeitversatz für das Auslesen des Zündung-aus-Signals einprogrammiert.

Der Erfindung liegt die Aufgabe zugrunde, in einem Kraftfahrzeug eine Tiefentladung der Energiespeichereinrichtung aufgrund einer in einem Steuergerät automatisiert durchgeführten Aktualisierung eines Konfigurationsdatensatzes zu vermeiden.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung ist ein Verfahren zum Installieren oder Einstellen eines Konfigurationsdatensatzes in einem Steuergerät eines Kraftfahrzeugs bereitgestellt. Bei dem Konfigurationsdatensatz kann es sich beispielsweise um ein Software-Update für das Steuergerät handeln, also eine aktualisierte Fassung eines Steuerprogramms des Steuergeräts. Zusätzlich oder alternativ dazu kann der Konfigurationsdatensatz als Datentypen auch beispielsweise Navigationsdaten und/oder Parametrierungsdaten zum Einstellen eines Betriebsverhaltens des Steuergeräts umfassen. Parametrierungsdaten sind beispielsweise dazu vorgesehen, ein Betriebsprogramm des Steuergeräts an den Fahrzeugtyp des Kraftfahrzeugs anzupassen. Beispielsweise kann Wert betreffend einen Achsstand des Kraftfahrzeugs in dem Steuergerät eingestellt werden. Zusätzlich oder alternativ dazu kann durch die Parametrierungsdaten beispielsweise auch ein Betriebsverhalten einer ESC - Electronic Stability Control, elektronische Stabilitätskontrolle - eingestellt oder justiert werden.

Das Verfahren sieht zur Lösung der Aufgabe vor, dass noch vor dem eigentlichen Abspeichern oder Einstellen des Konfigurationsdatensatzes in dem Steuergerät zunächst ein Energiebedarf jeder für das Einstellen des Konfigurationsdatensatzes benötigten Fahrzeugkomponente prädiziert wird. Neben dem Steuergerät selbst können weitere Fahrzeugkomponenten beispielsweise zumindest einen Kommunikationsdatenbus zum fahrzeuginternen Übertragen des Konfigurationsdatensatzes und/oder eine Speichereinrichtung zum Zwischenspeichern und Bereitstellen des Konfigurationsdatensatzes umfassen. Des Weiteren wird eine aktuell verfügbar Restenergie einer Energiespeichereinrichtung des Kraftfahrzeugs ermittelt. Mit anderen Worten wird der aktuelle Ladezustand der Energiespeichereinrichtung ermittelt. Die Energiespeichereinrichtung kann hierbei beispielsweise eine Fahrzeugbatterie des Kraftfahrzeugs sein oder zumindest eine solche Fahrzeugbatterie umfassen.

Während einer Parkphase des Kraftfahrzeugs, wenn also der Antriebsmotor des Kraftfahrzeugs ausgeschaltet ist, wird ein Auslösesignal zum Einstellen der Konfigurationsdaten an das Steuergerät nur ausgesendet, falls die aktuelle Restenergie größer als der prädizierte Energiebedarf ist. Mit anderen Worten werden z.B. Batteriegrößen ermittelt und überprüft oder verifiziert, ob das Update, d.h. das Einstellen des Konfigurationsdatensatzes, gestartet werden darf. Mit anderen Worten wird das Steuergerät zum Einstellen der Konfigurationsdaten nur betrieben, falls die Restenergie in der Energiespeichereinrichtung dazu ausreicht. Unter verfügbarer Restenergie ist im Zusammenhang mit der Erfindung diejenige Energiemenge zu verstehen, die noch aus der Energiespeichereinrichtung entnommen werden kann, ohne dass hierdurch eine vorbestimmte Energiereserve der Energiespeichereinrichtung unterschritten wird. Die Energiespeicherreserve kann beispielsweise dazu vorgesehen sein, eine Verbrennungskraftmaschine des Kraftfahrzeugs, beispielsweise einen Ottomotor oder einen Dieselmotor, am Ende der Parkphase mittels eines elektrischen Starters wieder zu starten.

Durch die Erfindung ergibt sich der Vorteil, dass das Steuergerät und gegebenenfalls die benötigten übrigen Fahrzeugkomponenten in der Parkphase nur betrieben werden, um den Konfigurationsdatensatz einzustellen, falls die Restenergie dazu ausreicht. Hierdurch ist zuverlässig verhindert, dass das Update, d.h. das Einstellen des Konfigurationsdatensatzes, vorzeitig vor Beenden des vollständigen Einstellens des Konfigurationsdatensatze im Steuergerät beendet oder abgebrochen werden muss.

Die Erfindung betrifft den Fall, dass mehrere Konfigurationsdatensätze für jeweils ein Steuergerät empfangen werden. Gemäß der Erfindung wird ein zweiter Konfigurationsdatensatz für ein zweites Steuergerät empfangen und Abhängigkeitsdaten betreffend den bereits beschriebenen ersten Konfigurationsdatensatz und den zweiten Konfigurationsdatensatz werden ebenfalls empfangen. Die Abhängigkeitsdaten beschreiben, ob der erste Konfigurationsdatensatz bei dem bisher beschriebenen ersten Steuergerät eingestellt oder installiert werden darf, ohne dass der zweite Konfigurationsdatensatz in dem zweiten Steuergerät ebenfalls installiert oder eingestellt wird. Das Auslösesignal zum Einstellen des Konfigurationsdatensatzes (in dem ersten Steuergerät) wird erzeugt, falls die Restenergie größer als der beschriebene Energiebedarf ist und der Konfigurationsdatensatz gemäß den Abhängigkeitsdaten unabhängig von dem zweiten Konfigurationsdatensatz ist. Hierdurch ergibt sich der Vorteil, dass bei Vorliegen mehrerer Konfigurationsdatensätze auch nur ein Teil der Konfigurationsdatensätze bereits installiert wird, wenn zumindest hierzu die Restenergie ausreicht. Dies ist insbesondere vorteilhaft, wenn die Restenergie nicht für das Einstellen aller Konfigurationsdatensätze ausreicht. Bevorzugt wird zusätzlich im Zusammenhang mit einer Ermittlung der voraussichtlichen Parkdauer auch überprüft, ob der Konfigurationsdatensatz ohne den zweiten Konfigurationsdatensatz eingestellt werden kann, wenn nur die Zeitdauer zur Verfügung steht, die zum Installieren oder Einstellen des einen Konfigurationsdatensatzes nötig ist. Mit anderen Worten kann während einer Parkphase darauf verzichtet werden, den zweiten Konfigurationsdatensatz einzustellen oder zu installieren, falls für diesen eine Zeitdauer benötigt wird, die größer als die Parkdauer ist.

Zum Prädizieren des Energiebedarfs wird eine Zeitdauer ermittelt, die für das Einstellen der Konfigurationsdaten in dem Steuergerät voraussichtlich benötigt wird. Mit anderen Worten wird eine voraussichtliche Update-Dauer ermittelt. Als Energiebedarf wird derjenige Energiebetrag ermittelt, den insgesamt jede benötigte Fahrzeugkomponente bei einem Betrieb für die Zeitdauer benötigt. Es wird also mit anderen Worten ermittelt, wie lange das Update dauern wird. Dann wird der Energiebedarf für den Betrieb jeder benötigten Fahrzeugkomponente ermittelt. Die benötigten Fahrzeugkomponenten und der jeweilige Energieverbrauch jeder Fahrzeugkomponente können beispielsweise jeweils im Voraus ermittelt werden und beispielsweise als Tabelle oder Datenbank bereitgestellt sein. Dies weist den Vorteil auf, dass hierbei auch eine Information für die voraussichtliche Zeitdauer des Updates bereitsteht. Hierdurch kann beispielsweise anhand einer Uhrzeit ermittelt werden, ob es wahrscheinlich ist, dass das Update auch von der Zeitdauer her erfolgreich durchgeführt werden kann, bevor die Parkphase beendet wird. Beispielsweise ist es um zwei Uhr morgens unwahrscheinlich, dass ein Update, das eine Zeitdauer von beispielsweise einer Stunde benötigt, durch das Beenden der Parkphase unterbrochen wird. Die Zeitdauer kann beispielsweise auf der Grundlage eines Datenvolumens oder einer Datenmenge des Konfigurationsdatensatzes ermittelt werden. Hierzu kann für das Steuergerät eine Verarbeitungsgeschwindigkeit zugrunde gelegt werden, die angibt, wie viel Zeit pro Datenmengeneinheit, beispielsweise Kilobyte, benötigt wird.

Im Zusammenhang mit dem Ermitteln der Zeitdauer ermittelt eine Beobachtungseinrichtung zumindest ein Nutzungsmuster einer fahrerseitigen Nutzung des Kraftfahrzeugs. Mit anderen Worten wird beobachtet, zu welchen Zeiten der Fahrer das Kraftfahrzeug nutzt und/oder an welchen Orten der Fahrer wie lange parkt. Es wird also durch das Nutzungsmuster zumindest ein Ort beschrieben, an welchem das Kraftfahrzeug schon einmal geparkt worden ist, und die Zeitdauer der Parkphase angegeben. Des Weiteren kann das Nutzungsmuster auch den Wochentag und/oder die Angabe Werktag/Feiertag, die Jahreszeit und/oder ein zuvor zu beobachtendes Ereignis angeben. Beispielsweise kann als Ereignis festgestellt werden, dass ein Kindersitz im Kraftfahrzeug befestigt wird. Wird dann als Parkort ein Stellplatz vor einem Kindergarten ermittelt, so kann davon ausgegangen werden, dass als Nutzungsmuster das Zusteigen oder Aussteigen eines Kindes zugrunde gelegt werden kann und die Parkphase entsprechend der vorangegangnen Beobachtung eine vorbestimmte Parkdauer umfassen wird, die für diesen Vorgang benötigt wird. Zu Beginn einer Parkphase wird dann anhand oder auf der Grundlage des zumindest einen Nutzungsmusters eine voraussichtliche Parkdauer ermittelt und das Auslösesignal nur erzeugt, falls die Parkdauer mindestens der Zeitdauer entspricht, die für das Einstellen der Konfigurationsdaten nötig ist. Es wird also gelernt, wann und/oder wie der Fahrer das Kraftfahrzeug bewegt oder nutzt. Daraus kann die voraussichtliche Parkdauer hergeleitet werden. Durch Vergleichen eines aktuellen Nutzungsfalles, also der aktuellen Fahrsituation oder Parksituation, mit dem zumindest einen Nutzungsmuster kann dann ermittelt werden, wie lange die aktuelle Parkphase voraussichtlich dauern wird. Für das Nutzungsmuster können neben Kalenderdaten auch andere Daten verwendet werden, z.B. für Standortdaten auch Daten aus einem sozialen Netzwerk. Es können fahrzeuginterne und fahrzeugexterne Datenquellen ausgewertet werden.

Um das zumindest eine Nutzungsmuster zu ermitteln, ist vorgesehen, dass Verhaltensdaten des Fahrers im Kraftfahrzeug und/oder aus einer externen Datenquelle ermittelt werden. Unter Betriebsdaten des Kraftfahrzeugs fallen insbesondere auch Fahrroutendaten und/oder Betriebszeitdaten, also Uhrzeiten oder Tageszeiten oder Tage, an welchen das Kraftfahrzeug betrieben wird. Verhaltensdaten des Fahrers umfassen die Identität des Fahrers und/oder Nutzungsdaten betreffend zumindest ein vom Fahrer im Kraftfahrzeug genutztes Telefon und/oder Infotainmentsystem, Termindaten des Fahrers, die beispielsweise von einem mobilen Endgerät des Fahrers und/oder von einer Terminplanungsanwendung aus dem Internet empfangen werden können. Eine externe Datenquelle kann z.B. ein soziales Netzwerk im Internet sein, in welchem z.B. Fahrergewohnheiten präsentiert werden. Mittels einer Methode für maschinelles Lernen werden sich wiederholende Werte der Betriebsdaten und/oder Verhaltensdaten ermittelt und zu dem zumindest einen Nutzungsmuster zusammengefasst. Methoden für das maschinelle Lernen sind an sich aus dem Stand der Technik verfügbar. Sie können mit geringem Aufwand an das beschriebene Problem der Erkennung eines Nutzungsmusters auf der Grundlage von Betriebsdaten und/oder Verhaltensdaten angepasst werden. Die Methode für das maschinelle Lernen kann beispielsweise durch eine Prozessoreinrichtung des Kraftfahrzeugs selbst durchgeführt werden und/oder durch eine Prozessoreinrichtung einer Servereinrichtung, die beispielsweise Bestandteil des Internets und/oder einer Cloud und/oder eines Firmennetzes sein kann. Hierzu können die Betriebsdaten und/oder Verhaltensdaten über eine Funkverbindung aus dem Kraftfahrzeug zu der Servereinrichtung hin übertragen werden.

Zu der Erfindung gehören optionale Weiterbildungen, durch deren Merkmale sich zusätzliche Vorteile ergeben.

Gemäß einer Weiterbildung wird zumindest eine für das Einstellen des Konfigurationsdatensatzes benötigte Fahrzeugkomponente auf der Grundlage von Vernetzungsarchitekturdaten ermittelt. Solche Vernetzungsarchitekturdaten beschreiben insbesondere die Kommunikationsverbindungen oder Kommunikationswege zwischen Steuergeräten des Kraftfahrzeugs. Solche Vernetzungsarchitekturdaten sind als Bestandteil von Konstruktionsdaten des Kraftfahrzeugs verfügbar. Mittels der Vernetzungsarchitekturdaten kann in vorteilhafter Weise ermittelt werden, welcher Kommunikationsbus zum Übertragen des Konfigurationsdatensatzes von einer Speichereinrichtung des Kraftfahrzeugs und/oder einem Funkmodul des Kraftfahrzeugs hin zu dem Steuergerät benötigt werden. Das Funkmodul kann verwendet werden, um den Konfigurationsdatensatz während der Parkphase zu empfangen und für das Steuergerät bereitzustellen. Neben der Ermittlung ist auch relevant, dass Steuergeräte für das Einstellen des Konfigurationsdatensatzes zu- oder eingeschaltet werden können. Also nur diejenigen Steuergeräte, welche für das Update relevant sind. Dies führt zu einer weiteren Energieersparnis im Vergleich zu dem Ansatz, dass alle Steuergeräte und alle Fahrzeugbusse aktiviert werden.

Eine vorteilhafte Weiterbildung sieht aber vor, dass der Konfigurationsdatensatz während eines Fahrbetriebs des Kraftfahrzeugs bei eingeschaltetem Antriebsmotor aus einer fahrzeugexternen Datenquelle empfangen wird. Bei der fahrzeugexternen Datenquelle kann es sich beispielsweise um einen Server des Internets handeln. Diese Weiterbildung weist den Vorteil auf, dass der Konfigurationsdatensatz zu Beginn der Parkphase bereits bereitsteht und somit keine Energie für das Empfangen des Konfigurationsdatensatzes während der Parkphase benötigt wird.

Zu der Erfindung gehört auch eine Steuervorrichtung für ein Kraftfahrzeug. Die Steuervorrichtung weist einen Dateneingang zum Empfangen von Zustandsdaten einer Energiespeichereinrichtung und einen Steuerausgang zum Steuern von Fahrzeugkomponenten des Kraftfahrzeugs auf. Die Zustandsdaten der Energiespeichereinrichtung können beispielsweise einen aktuellen Ladezustand der Energiespeichereinrichtung angeben. Die Zustandsdaten können auch beispielsweise einen aus der Energiespeichereinrichtung entnommenen elektrischen Strom beschreiben. Dann kann die Restenergie beispielsweise durch Aufintegrieren der Strommenge ermittelt werden. Die Steuervorrichtung ist dazu ausgelegt, eine Ausführungsform des erfindungsgemäßen Verfahrens durchzuführen. Die Steuervorrichtung kann beispielsweise als Steuergerät bereitgestellt sein. Insbesondere ist vorgesehen, die Steuervorrichtung als Gateway zum Verbinden oder Koppeln zumindest zweier Kommunikationsbusse des Kraftfahrzeugs bereitzustellen. Beispielsweise kann durch das Gateway ein Ethernet-Kommunikationsbus mit einem CAN-Kommunikationsbus (CAN - Controller Area Network) gekoppelt sein.

Schließlich umfasst die Erfindung auch ein Kraftfahrzeug, welches eine Ausführungsform der erfindungsgemäßen Steuervorrichtung aufweist. Das erfindungsgemäße Kraftfahrzeug ist bevorzugt als Kraftwagen, insbesondere als Personenkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs; und
- Fig. 2: eine schematische Darstellung einer Ausführungsform der erfindungsgemäßen Steuervorrichtung, die in dem Kraftfahrzeug bereitgestellt sein kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

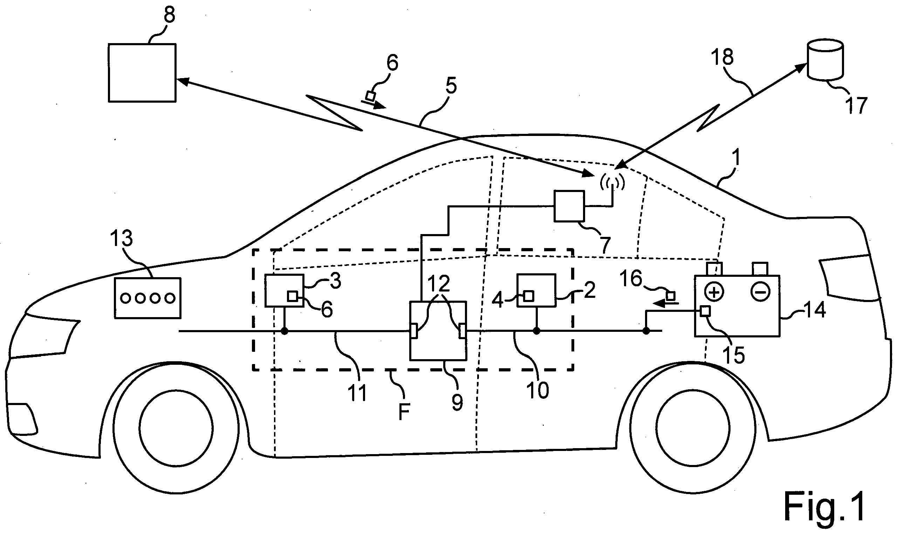

Fig. 1 zeigt ein Kraftfahrzeug 1, bei dem es sich beispielsweise um einen Kraftwagen, insbesondere um einen Personenkraftwagen, handeln kann. Das Kraftfahrzeug 1 kann Steuergeräte 2, 3 aufweisen, die durch ein Steuerprogramm 4 betrieben werden. In dem in Fig. 1 veranschaulichten Beispiel ist nur das Steuerprogramm 4 für das Steuergerät 2 dargestellt.

Bei dem Kraftfahrzeug 1 ist es möglich, das Steuerprogramm 4 des Steuergeräts 2 in einem OTA-Update oder Over-the-Air-Update zu aktualisieren, ohne dass hierbei das Kraftfahrzeug 1 von dem Benutzer (nicht dargestellt) in eine Werkstatt gebracht werden muss. Stattdessen kann das Kraftfahrzeug 1 über eine Funkverbindung 5 einen Konfigurationsdatensatz 6 empfangen, welcher aktuelle Daten für das Steuergerät 2 aufweist, also beispielsweise eine Update-Software, mittels welcher das Steuerprogramm 4 ersetzt werden kann, oder Parametrierungsdaten zum Parametrieren des Steuerprogramms 4 oder Navigationsdaten zum Aktualisieren von Navigationsinformationen. Das Steuerprogramm 4 und/oder zumindest ein weiteres (nicht dargestelltes) Steuergerät des Kraftfahrzeugs 1 kann entsprechend für ein solches OTA-Update ausgelegt sein.

Zum Empfangen des Konfigurationsdatensatzes 6 kann das Kraftfahrzeug 1 ein Funkmodul 7 aufweisen, bei dem es sich beispielsweise um ein Mobilfunkmodul oder ein WLAN-Funkmodul handeln kann. Als Mobilfunkmodul kann das Funkmodul 7 beispielsweise gemäß dem Standard GSM, UMTS, LTE und/oder 5G oder einem anderen Mobilfunkstandard betrieben werden. Der Konfigurationsdatensatz 6 kann beispielsweise durch eine erste Servereinrichtung 8 bereitgestellt sein, bei der es sich beispielsweise um einen Server des Internets handeln kann.

Das Update, d.h. das Einstellen oder Installieren des Konfigurationsdatensatzes 6 in dem Steuergerät 2, kann durch eine Steuervorrichtung 9 gesteuert werden, bei welcher es sich in dem gezeigten Beispiel um ein Gateway handeln kann, über welches ein erster Kommunikationsbus 10 und ein zweiter Kommunikationsbus 11 gekoppelt oder verbunden sein können. Bei dem Kommunikationsbus 10 kann es sich beispielsweise um einen CAN-Bus (CAN - controller area network) handeln. Bei dem Kommunikationsbus 11 kann es sich beispielsweise um ein Ethernet-Datennetzwerk handeln. Die Steuervorrichtung 9 kann mit den Kommunikationsbussen 10, 11 beispielsweise über Busanschlüsse 12 verbunden sein. Die Busanschlüsse 12 stellen zudem zusammen einen Dateneingang und einen Steuerausgang im Sinne der Erfindung dar. Bei dem Kraftfahrzeug 1 ist vorgesehen, dass die Steuervorrichtung 9 das Einstellen des Konfigurationsdatensatzes 6 in dem Steuergerät 2 nur während einer Parkphase durchführt, während welcher bei dem Kraftfahrzeug 1 ein Antriebsmotor 13 ausgeschaltet ist. Bei dem Antriebsmotor 13 kann es sich beispielsweise um eine Verbrennungskraftmaschine und/oder eine elektrische Maschine handeln. Während das Kraftfahrzeug 1 abgeschaltet ist, müssen das Steuergerät 2 und alle weiteren, an dem Update beteiligten Fahrzeugkomponenten durch eine Energiespeichereinrichtung 14 des Kraftfahrzeugs 1 mit elektrischer Energie versorgt werden. Bei der Energiespeichereinrichtung 14 kann es sich beispielsweise um eine Fahrzeugbatterie, beispielsweise eine 12V-Batterie oder 48V-Batterie, handeln. In Fig. 1 sind die entsprechenden elektrischen Verbindungen nicht dargestellt.

Das Kraftfahrzeug 1 kann eine Sensoreinrichtung 15 aufweisen, welche einen aktuellen Betriebszustand der Energiespeichereinrichtung 14 als Zustandsdaten 16 ermitteln und der Steuervorrichtung 9 signalisieren kann. Die Zustandsdaten 16 können beispielsweise den aktuellen Ladezustand der Energiespeichereinrichtung 14 beschreiben oder angeben. Die Zustandsdaten 16 können auch weitere Batteriegrößen angeben, beispielsweise einen elektrischen Strom, eine elektrische Spannung und/oder eine Temperatur der Energiespeichereinrichtung 14. Die Zustandsdaten 16 können beispielsweise über einen oder beide der Kommunikationsbusse 10, 11 an die Steuervorrichtung 9 übertragen werden.

Der Konfigurationsdatensatz 6 kann über die Funkverbindung 5 beispielsweise bereits während einer Fahrt des Kraftfahrzeugs 1, wenn der Antriebsmotor 13 eingeschaltet ist, übertragen oder empfangen werden. Der Konfigurationsdatensatz 6 kann dann beispielsweise von dem Steuergerät 3 aus dem Kommunikationsmodul 7 empfangen werden und in dem Steuergerät 3 gespeichert werden. Hierzu können das Steuergerät 3 und das Kommunikationsmodul 7 beispielsweise über einen der Kommunikationsbusse 10, 11 oder über beide Kommunikationsbusse 10, 11 miteinander gekoppelt sein. Zusätzlich zu dem Konfigurationsdatensatz 6 kann noch für zumindest ein weiteres Steuergerät jeweils ein Konfigurationsdatensatz (nicht dargestellt) empfangen und beispielsweise in dem Steuergerät 3 gespeichert werden. Auch kann sich das Steuergerät 3 selbst updaten, getriggert von dem Steuergerät 9. Die Updatedaten, d.h. der Konfigurationsdatensatz 6, können auch in dem Kommunikationsmodul 7 oder in dem Steuergerät 12 gespeichert sein.

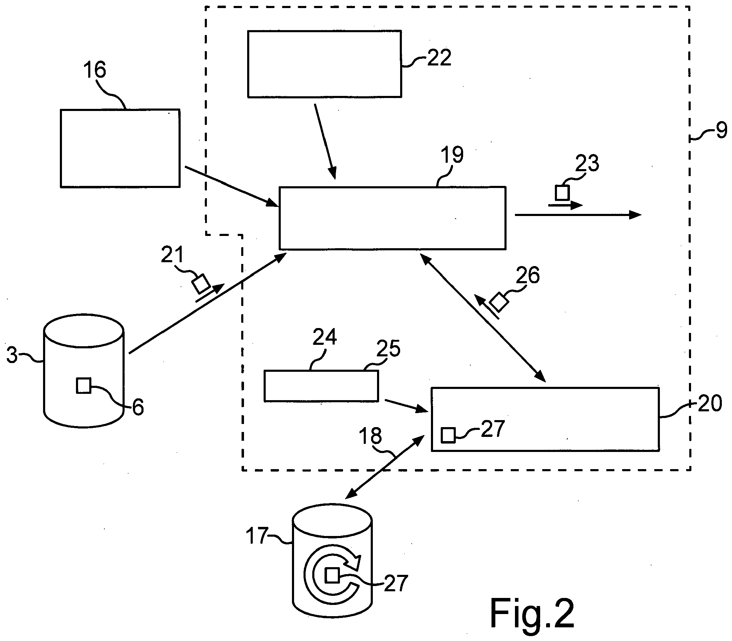

Nach dem Abschalten des Antriebsmotors 13 führt dann die Steuervorrichtung 9 das im Folgenden anhand von Fig. 2 beschriebene Verfahren durch.

Fig. 2 zeigt hierzu noch einmal die Steuervorrichtung 9, das Steuergerät 3, in welchem der Konfigurationsdatensatz 6 gespeichert ist, und eine zweite Servereinrichtung 17, zu welcher über das Kommunikationsmodul 7 (siehe Fig. 1) eine Funkverbindung 18 während des Betriebs des Kraftfahrzeugs 1 und/oder während der Parkphase aufgebaut werden kann.

Die Steuervorrichtung 9 kann ein erstes Funktionsmodul 19 und ein zweites Funktionsmodul 20 aufweisen. Die beiden Funktionsmodule 19, 20 können jeweils als Programmmodul für eine Prozessoreinrichtung der Steuervorrichtung 9 bereitgestellt sein.

Das erste Funktionsmodul 19 führt eine Prädiktion auf Basis des Betriebszustands 16 der Energiespeichereinrichtung 14 (Fig. 1) durch und überprüft hierdurch, ob das Update für das Steuergerät 2 gestartet werden darf. Dazu prädiziert das erste Funktionsmodul 19 auf der Basis des Datenvolumens oder der Datenmenge 21 des Konfigurationsdatensatzes 6, wie lange der Updatevorgang für das Steuergerät 2 und/oder für das zumindest eine weitere Steuergerät dauern wird, für welches jeweils ein Konfigurationsdatensatz (nicht dargestellt) in dem Steuergerät 3 gespeichert ist. Die jeweilige Angabe über die Datenmenge 21 kann beispielsweise durch das Steuergerät 3 an die Steuervorrichtung 9 signalisiert werden. Für die Berechnung der Dauer des Updatevorgangs kann beispielsweise ein Umrechnungsfaktor bereitgestellt sein, welcher beispielsweise eine Zeitangabe pro Byte vorsieht, der dann mit der Angabe über die Datenmenge 21 multipliziert werden kann. Auf Basis des Betriebszustands 16 der Speichervorrichtung 14 wird ermittelt, ob in der Energiespeichereinrichtung 14 für den Betrieb aller zum Durchführen des Updates nötigen Fahrzeugkomponenten genug elektrische Energie vorhanden ist. Welche Fahrzeugkomponenten hierbei zu betreiben sind, kann das erste Funktionsmodul 19 aus Informationen 22 über das Kraftfahrzeug 1 ermitteln, wobei die Informationen 22 beispielsweise eine Vernetzungsarchitektur, also beispielsweise die Kommunikationsbusse 10, 11, Energieverbräuche der einzelnen Steuergeräte 2, 3 und die Anzahl der beteiligten Steuergeräte beschreiben.

In dem in Fig. 1 veranschaulichten Beispiel müssen zumindest das Steuergerät 3, die Steuervorrichtung 9 und das Steuergerät 2 sowie die Kommunikationsbusse 10 und 11 betrieben werden, um den Konfigurationsdatensatz 6 aus dem Steuergerät 3 in das Steuergerät 2 zu übertragen. Die benötigten Fahrzeugkomponenten F sind in Fig. 1 kenntlich gemacht.

Wenn auf Basis der Batteriegrößen oder Zustandsdaten 16 ermittelt wird, dass genügend Leistung oder Energie für die Zeit des Updatevorgangs in der Energiespeichereinrichtung 14 zur Verfügung steht, wird ein Auslösesignal 23 zum Starten des Updates erzeugt. In Abhängigkeit von dem Auslösesignal 23 können durch die Steuervorrichtung 9 dann beispielsweise die Kommunikationsbusse 10, 11 aktiviert werden und über die Kommunikationsbusse Aufwecksignale an die Steuergeräte 2 und 3 gesendet werden. Des Weiteren können dann Updatebefehle ausgesendet werden, welche das Steuergerät 3 zum Aussenden des Konfigurationsdatensatzes 6 an das Steuergerät 2 veranlassen. Ein solcher Befehl kann auch durch das Steuergerät 2 selbst in Abhängigkeit von einem eigenen Updatebefehl erzeugt werden.

Indem der Konfigurationsdatensatz 6 während der Fahrt heruntergeladen und im Kraftfahrzeug 1 zwischengespeichert wurde, kann in der Stand-/Parkphase das Update selbst dann durchgeführt werden, wenn das Kraftfahrzeug 1 in einer Tiefgarage steht oder während der Parkphase kein Mobilfunknetz zur Verfügung steht.

Im Folgenden ist eine optionale Weiterbildung des in Fig. 2 veranschaulichten Verfahrens beschrieben.

Die Erweiterung des Konzepts sieht vor, zu lernen, wie der Fahrer das Kraftfahrzeug 1 bewegt, um so einen optimalen Zeitpunkt für das Update festzulegen. Fährt zum Beispiel der Fahrer jeden Tag zwischen 8 und 8.30 Uhr seine Kinder in den Kindergarten, könnte nach Abstellen des Kraftfahrzeugs 1 das Update durchgeführt werden. Das System hat in diesem Fall zum Beispiel gelernt, dass das Kraftfahrzeug 1 mindestens immer fünf Minuten am Kindergarten geparkt wird. Würde dann das Update weniger als fünf Minuten dauern, könnte das Update gestartet werden. Dauert dies jedoch mehr als fünf Minuten, muss ein anderer Zeitpunkt festgelegt werden. Mit anderen Worten wird während der Parkphase vor dem Kindergarten das Auslösesignal 23 dann nicht erzeugt. Das Schätzen der Parkdauer hat auch den Vorteil, dass das Update immer fertig ist, wenn der Fahrer zurück ins Kraftfahrzeug 1 kommt. Wird das Fahrerverhalten nicht gelernt, so könnte es zum Beispiel passieren, dass der Fahrer das Kraftfahrzeug 1 abstellt, das Update gestartet wird und der Fahrer dann, wenn er beispielsweise nach einer Minute zurückkommt, mit dem Kraftfahrzeug 1 nicht losfahren kann, da das Steuergerät immer noch durch das Update blockiert oder funktionsunfähig ist. Über das Lernen können also sichere Updatezeitpunkte bestimmt werden, welche somit mehr Komfort bieten.

Hierzu muss aber das Verhalten des Fahrers zunächst gelernt werden, um es dann zu prädizieren. Hierzu ist in der Steuervorrichtung 9 das zweite Funktionsmodul 20 bereitgestellt, welches zum Lernen des Fahrerverhaltens ausgelegt ist. Hierzu kann durch das zweite Funktionsmodul 20 eine Methode aus dem Bereich des Machine-Learning und/oder der künstlichen Intelligenz implementiert oder realisiert sein. Das Fahrerverhalten wird auf der Grundlage von Verhaltensdaten 25 des Fahrers ermittelt, die jeweils durch Sensoren und/oder Zustandssignale von Steuergeräten des Kraftfahrzeugs 1 erzeugt werden können. Zum Lernen des Fahrerverhaltens können externe Datenquellen, z.B. soziale Netzwerke, und weitere Daten und/oder Termindaten mit einbezogen werden. Aber auch Daten von fahrzeuginternen Datenquellen können genutzt werden. Das gelernte Nutzerverhalten wird dann als zumindest Verhaltensmuster oder Nutzungsmuster 27 gespeichert.

In Abhängigkeit von einem aktuellen Fahrerverhalten kann dann die voraussichtliche Parkdauer 26 durch das zweite Funktionsmodul 20 ermittelt und dem ersten Funktionsmodul 19 signalisiert werden.

Das Lernen des Fahrerverhaltens kann zusätzlich oder alternativ dazu auch durch die zweite Servereinrichtung 17 erfolgen. Hierzu können die die Verhaltensdaten 25 über die Funkverbindung 18 übertragen werden. Die zweite Servereinrichtung 17 kann dann in einem Offline-Lernverfahren, d.h. ohne eine weitere Funkverbindung 18, ein Nutzungsmuster 27 in derselben Weise, wie im Zusammenhang mit dem zweiten Funktionsmodul 20 beschrieben, ermitteln.

Das zweite Funktionsmodul 20 und/oder die zweite Servereinrichtung 17 stellen somit eine Beobachtungseinrichtung im Sinne der Erfindung dar.

Die gelernten Größen, d.h. das zumindest eine Nutzungsmuster 27, werden dann an das Kraftfahrzeug 1 über die Funkverbindung 18 zurückgesendet, um innerhalb des Kraftfahrzeugs 1 zu entscheiden, wann das Update durchgeführt wird.

Insgesamt zeigt das Beispiel, wie durch die Erfindung ein situationsangepasstes Update von Fahrzeugparametern durchgeführt werden kann.

## Patentansprüche

1. Verfahren zum Einstellen eines Konfigurationsdatensatzes (6) in einem Steuergerät (2) eines Kraftfahrzeugs (1), wobei
- ein Energiebedarf jeder für das Einstellen des Konfigurationsdatensatzes (6) benötigten Fahrzeugkomponente (F) prädiziert wird, wobei zum Prädizieren des Energiebedarfs eine Zeitdauer, die für das Einstellen des Konfigurationsdatensatzes (6) in dem Steuergerät (2) voraussichtlich benötigt wird, ermittelt wird und als Energiebedarf derjenige Energiebetrag ermittelt wird, den insgesamt jede benötigte Fahrzeugkomponente (F) bei einem Betrieb für die Zeitdauer benötigt,
- ein zweiter Konfigurationsdatensatz für ein zweites Steuergerät empfangen wird und Abhängigkeitsdaten betreffend den Konfigurationsdatensatz (6) und den zweiten Konfigurationsdatensatz empfangen werden,
- eine aktuell verfügbare Restenergie einer Energiespeichereinrichtung (14) des Kraftfahrzeugs (1) ermittelt wird und
- während einer Parkphase bei ausgeschaltetem Antriebsmotor (13) des Kraftfahrzeugs (1) ein Auslösesignal (23) zum Einstellen des Konfigurationsdatensatzes (6) an das Steuergerät (2) nur ausgesendet wird, falls die aktuelle Restenergie größer als der prädizierte Energiebedarf ist und der Konfigurationsdatensatz (6) gemäß den Abhängigkeitsdaten unabhängig von dem zweiten Konfigurationsdatensatz ist,
**dadurch gekennzeichnet, dass**
eine Beobachtungseinrichtung (17, 20) zumindest ein Nutzungsmuster (27) einer Nutzung des Kraftfahrzeugs (1) durch einen Fahrer ermittelt und zu Beginn der Parkphase anhand des zumindest einen Nutzungsmusters (27) eine voraussichtliche Parkdauer ermittelt und das Auslösesignal (23) nur erzeugt wird, falls die Parkdauer mindestens der Zeitdauer entspricht, wobei zum Ermitteln des zumindest einen Nutzungsmusters (27) Verhaltensdaten (25) des Fahrers im Kraftfahrzeug (1) und/oder aus einer fahrzeugexternen Datenquelle ermittelt werden, und mittels einer Methode für maschinelles Lernen sich wiederholende Werte der Verhaltensdaten (25) zu dem zumindest einen Nutzungsmuster (27) zusammengefasst werden, wobei
die Verhaltensdaten des Fahrers umfassen:
- die Identität des Fahrers und/oder
- Nutzungsdaten betreffend zumindest ein vom Fahrer im Kraftfahrzeug genutztes Telefon und/oder Infotainmentsystem und/oder
- Termindaten des Fahrers und/oder
- Fahrergewohnheiten, die in einem sozialen Netzwerk im Internet präsentiert werden.

2. Verfahren nach Anspruch 1, wobei zumindest eine für das Einstellen des Konfigurationsdatensatzes (6) benötigte Fahrzeugkomponente (F) auf der Grundlage von Vernetzungsarchitekturdaten (22) ermittelt und/oder für das Einstellen eingeschaltet wird.

3. Verfahren nach einem der vorhergehenden Ansprüche, wobei der Konfigurationsdatensatz (6) während eines Fahrbetriebes der Kraftfahrzeugs (1) bei eingeschaltetem Antriebsmotor (13) aus einer fahrzeugexternen Datenquelle (8) empfangen wird.

4. Verfahren nach einem der vorhergehenden Ansprüche, wobei der Konfigurationsdatensatz (6) zumindest einen der folgenden Datentypen umfasst: ein Software-Update für das Steuergerät (2), Navigationsdaten, Parametrierungsdaten zum Einstellen eines Betriebsverhaltens des Steuergeräts (2).

5. Steuervorrichtung (9) für ein Kraftfahrzeug (1), wobei die Steuervorrichtung (2) einen Dateneingang (12) zum Empfangen von Zustandsdaten (16) einer Energiespeichereinrichtung (14) und einen Steuerausgang (12) zum Steuern von Fahrzeugkomponenten (F) des Kraftfahrzeugs (1) aufweist, wobei die Steuervorrichtung (9) zum Durchführen eines Verfahrens nach einem der vorhergehenden Ansprüche eingerichtet ist.

6. Kraftfahrzeug (1) mit einer Steuervorrichtung (9) nach Anspruch 5.

## Claims

1. Method for setting a configuration data record (6) in a control unit (2) of a motor vehicle (1), wherein
- an energy requirement of each vehicle component (F) required for setting the configuration data record (6) is predicted, wherein for predicting the energy requirement, a period of time which is expected to be required for setting the configuration data record (6) in the control unit (2) is determined and the energy requirement determined is the total amount of energy required for each vehicle component (F) during an operation for the period of time,
- a second configuration data record is received for a second control unit and dependency data relating to the configuration data record (6) and the second configuration data record are received,
- a currently available residual energy of an energy storage device (14) of the motor vehicle (1) is determined and
- during a parking phase when the drive motor (13) of the motor vehicle (1) is switched off, a trigger signal (23) for setting the configuration data record (6) is only sent to the control unit (2) if the current residual energy is greater than the predicted energy requirement and the configuration data record (6) is independent of the second configuration data record according to the dependency data,
**characterised in that**
an observation device (17, 20) determines at least one usage pattern (27) of a use of the motor vehicle (1) by a driver and at the beginning of the parking phase determines an estimated parking time based on the at least one usage pattern (27) and the trigger signal (23) is only generated if the parking duration is at least equal to the time duration, wherein behavioural data (25) of the driver in the motor vehicle (1) and/or from a vehicle-external data source are determined for determining the at least one usage pattern (27), and by means of a method for machine learning repeating values of the behavioural data (25) are aggregated to the at least one usage pattern (27), wherein
the behavioural data of the driver comprise:
- the identity of the driver and/or
- usage data concerning at least one telephone and/or infotainment system used by the driver in the motor vehicle and/or
- appointment data of the driver and/or
- driver habits presented in a social network on the Internet.

2. Method according to claim 1, wherein at least one vehicle component (F) required for setting the configuration data record (6) is determined on the basis of network architecture data (22) and/or is switched on for the setting.

3. Method according to any one of the preceding claims, wherein the configuration data record (6) is received from a vehicle external data source (8) during a driving operation of the motor vehicle (1) when the drive motor (13) is switched on.

4. Method according to any one of the preceding claims, wherein the configuration data record (6) comprises at least one of the following data types: a software update for the control unit (2), navigation data, parameterisation data for setting a performance behaviour of the control unit (2).

5. Control device (9) for a motor vehicle (1), wherein the control device (2) has a data input (12) for receiving status data (16) of an energy storage device (14) and a control output (12) for controlling vehicle components (F) of the motor vehicle (1), wherein the control device (9) is configured to carry out a method according to any one of the preceding claims.

6. Motor vehicle (1) with a control device (9) according to claim 5.

## Revendications

1. Procédé de réglage d'un ensemble de données de configuration (6) dans un dispositif de commande (2) d'un véhicule automobile (1), dans lequel
- un besoin en énergie de chaque composant de véhicule (F) nécessaire au réglage de l'ensemble de données de configuration (6) est prévu, dans lequel pour la prévoyance du besoin en énergie, une durée qui est nécessaire momentanément pour le réglage de l'ensemble de données de configuration (6) dans le dispositif de commande (2), est déterminée et la quantité d'énergie est déterminée comme besoin en énergie, que nécessite dans l'ensemble chaque composant de véhicule (F) nécessaire pour un fonctionnement pour la durée,
- un second ensemble de données de configuration pour un second appareil de commande est reçu et des données de dépendance concernant l'ensemble de données de configuration (6) et le second ensemble de données de configuration sont reçues,
- une énergie résiduelle disponible actuellement d'un dispositif d'accumulation d'énergie (14) du véhicule automobile (1) est déterminée et
- pendant une phase de stationnement en cas de moteur d'entraînement hors service (13) du véhicule automobile (1) un signal de déclenchement (23) est transmis pour le réglage de l'ensemble de données de configuration (6) au dispositif de commande (2) seulement au cas où l'énergie résiduelle actuelle est plus grande que le besoin en énergie prévu et l'ensemble de données de configuration (6) selon les données de dépendance est indépendant du second ensemble de données de configuration,
**caractérisé en ce que**
un dispositif d'observation (17, 20) détermine au moins un modèle d'utilisation (27) en utilisant le véhicule automobile (1) par un conducteur et détermine au début de la phase de stationnement au moyen de l'au moins un modèle d'utilisation (27) une durée de stationnement momentanée et le signal de déclenchement (23) est généré seulement au cas où la durée de stationnement correspond à au moins la durée, dans lequel pour la détermination d'au moins un modèle d'utilisation (27) des données de comportement (25) du conducteur sont déterminées dans le véhicule automobile (1) et/ou à partir d'une source de données externes au véhicule, et au moyen d'une méthode pour l'apprentissage mécanique des valeurs se répétant des données de compartiment (25) sont réunies dans l'au moins un modèle d'utilisation (27), dans lequel
les données de comportement du véhicule comprennent :
- l'identité du conducteur et/ou
- des données d'utilisation concernant au moins un téléphone utilisé par le conducteur dans le véhicule automobile et/ou système d'info-divertissement et/ou
- des données de rendez-vous du conducteur et/ou
- des habitudes de conducteur qui sont présentées dans un réseau social dans l'Internet.

2. Procédé selon la revendication 1, dans lequel au moins un composant de véhicule (F) nécessaire pour le réglage de l'ensemble de données de configuration (6) est déterminé sur la base de données d'architecture de mise en réseau (22) et/ou est mis en service pour le réglage.

3. Procédé selon l'une quelconque des revendications précédentes, dans lequel l'ensemble de données de configuration (6) est reçu pendant un mode de déplacement du véhicule automobile (1) en cas de moteur d'entraînement mis en service (13) à partir d'une source de données (8) externe au véhicule.

4. Procédé selon l'une quelconque des revendications précédentes, dans lequel l'ensemble de données de configuration (6) comprend au moins un des types de données suivants : une mise à jour logicielle pour le dispositif de commande (2), des données de navigation, des données de paramétrage pour le réglage d'un comportement de fonctionnement du dispositif de commande (2).

5. Dispositif de commande (9) pour un véhicule automobile (1), dans lequel le dispositif de commande (2) présente une entrée de données (12) pour la réception de données d'état (16) d'un dispositif d'accumulation d'énergie (14) et une sortie de commande (12) pour la commande de composants de véhicule (F) du véhicule automobile (1), dans lequel le dispositif de commande (9) est aménagé pour la réalisation d'un procédé selon l'une quelconque des revendications précédentes.

6. Véhicule automobile (1) avec un dispositif de commande (9) selon la revendication 5.
